# EUROPEAN PATENT SPECIFICATION

(11) **EP 0 656 286 B1**
(45) Date of publication and mention of the grant of the patent: **28.05.1997**
(21) Application number: 94118666.0
(22) Date of filing: 28.11.1994
(51) Int. Cl.: B60R 25/00

(54) **Anti-theft device to clamp pedals of motor vehicles**
Diebstahlschutzvorrichtung zum Blockieren der Pedale eines Kraftfahrzeuges
Dispositif antivol pour bloquer les pédales d'un véhicule à moteur

(30) Priority: 01.12.1993 IT PS930046 U
(43) Date of publication of application: 07.06.1995
(73) Proprietor: TECNOMACCHINE DI GENTILI M. & C. Snc, 61034 Fossombrone (PS) (IT)
(72) Inventor: Traversi, Lino, I-61046 Piobbico (PS) (IT)
(74) Representative: Petraz, Gilberto Luigi

(56) References cited:
- FR-A- 2 586 384

## Description

This invention concerns an anti-theft device to clamp pedals of motor vehicles as set forth in the main claim.

The anti-theft device to clamp pedals according to the invention is used to clamp the brake and clutch pedals of a motor vehicle securely and quickly.

The anti-theft device according to the invention is applied to any type of motor vehicle irrespective of the make and model of the vehicle.

Many anti-theft devices for motor vehicles have been disclosed which clamp at least one pedal of the vehicle.

One type of anti-theft device comprises a telescopic shaft with terminal hooks to be inserted below one pedal and on the steering wheel, this telescopic shaft being clamped longitudinally by locking means; this device is not very secure since it acts on only one pedal, which is not always perfectly clamped owing to the ample play permitted by the rigid hook. Moreover these hooks may scratch or spoil the steering wheel.

Other anti-theft devices have been disclosed which clamp two pedals, namely the brake pedal and clutch pedal, but these devices require difficult, burdensome and awkward manual operations both during the closing step and during the opening and removal step, and these operations make the use of those devices not very practical.

FR-A-2.625.962 discloses an anti-theft device comprising a box-shaped element including notches with which the levers of the pedals cooperate; the levers are clamped therein by a suitably shaped clamping shaft able to slide perpendicularly to the notches.

This box-shaped element comprises also a leg, which can be adjusted for height and cooperates at its free end with the floor of the vehicle so as to clamp the device against the levers of the pedals; this device is not at all practical to use, requires manual operations for adjustment to the various types of vehicle and does not clamp the levers of the pedals securely since the sizes of the seatings defined by the notches and by the clamping shaft are much greater than those of the levers of the pedals.

IT-A-1.149.007 discloses another anti-theft device to clamp pedals; this device comprises a fork shaped as an overturned "U" and borne on a tubular support which faces upwards and is equipped at its upper end with a safety lock; a clamping stirrup borne on an articulated rod able to slide within the support cooperates with the lock to clamp the levers of the pedals between the stirrup and the fork when the latter is placed astride the levers.

This device cannot be applied to all motor vehicles inasmuch as the height of the U-shaped fork cannot be adjusted and therefore cannot be suited to the position of the levers of the pedals since such position may change according to the model or make of the vehicle.

Moreover, the device of IT-A-1.149.007 requires for its actuation that the user should reach with his hands the area of the pedals so as to bring the clamping stirrup from the lower release position to the upper clamping position with awkward and difficult manoeuvres. Furthermore, the device of IT-A-1.149.007 is bulky and hard to arrange when it is in the inactive position.

FR-A-2.586.384 discloses an anti-theft device to clamp pedals which is immovably fitted to the vehicle and comprises a section bar, the lower end of which abuts against the floor of the vehicle while its upper end includes a safety lock.

This section bar comprises at its sides two lateral stationary stirrups positioned on opposite sides and open on their lower side; in these stirrups the levers of the brake and clutch pedals slide, and the stirrups are momentarily closed by two cams having a release position within the section bar and a clamping position outside the section bar. These cams are actuated by a slider able to move axially within the section bar and actuated by a safety lock.

This device entails the problem of having to be made in a considerable number of models so that it can be adapted to the various types of vehicles inasmuch as the height and distance between centres of the pedals can vary from one model to another.

Moreover in this device the stirrups must have a very accurate shape so that they can be adapted to and clamp the levers of the pedals effectively. Furthermore, the cams, so as to be brought to the clamping position, move in a direction substantially perpendicular to the direction of oscillation of the arms associated with the pedals, thus preventing the stirrups from gripping and clamping rigidly the levers against the stirrups.

Besides, the lateral stirrups in this device do not cooperate directly with the clamping cams, which are displaced only so far as to close at the lower side the opening of the stirrups, and this solution does not provide absolute security since it is possible to free the pedals by merely bending the end of the cams.

IT-A-MI92A002933 discloses an anti-theft device to clamp pedals which comprises grippers able to engage the levers of the brake and clutch pedals respectively of a motor vehicle; these grippers are associated with a supporting bar and with an actuation shaft fitted so that it can move axially within the supporting bar.

The actuation shaft can be moved from a release position to a clamping position, in which it actuates respectively the opening and closing of the grippers that cooperate with the levers of the pedals to be clamped.

This device also comprises resilient return spring means, which resiliently keep the actuation shaft in the release position, and also comprises a safety lock which clamps the actuation shaft in the clamping position.

The actuation shaft in this device can move axially within the supporting bar and is associated with a sleeve which moves axially on the outside of the supporting bar. Moreover in this device the grippers are of a double type and are solidly pivoted on the supporting bar.

The grippers in this embodiment are operated by a pair of actuation levers associated on one side with the actuation shaft and on the other side with the grippers themselves. Besides, the supporting bar cannot be adjusted for length and therefore the anti-theft device cannot be adapted to all models of motor vehicles since the position of the grippers cannot be adjusted to the height of the pedals and therefore does not ensure a secure installation and clamping of the device to the floor of the vehicle.

The present applicants have designed, tested and embodied this invention to overcome the drawbacks of the state of the art and to achieve further advantages.

This invention is set forth and characterised in the main claim, while the dependent claims describe variants of the idea of the main embodiment.

The purpose of this invention is to provide an anti-theft device to clamp pedals of motor vehicles which is simple, effective and secure at the same time.

The anti-theft device according to the invention can be adapted to any type of motor vehicle by means of a very simple and quick operation.

The anti-theft device according to the invention is easy to use and requires only a very simple and quick operation for its installation and removal.

The anti-theft device according to the invention comprises two tubular telescopic shafts, namely an upper outer shaft and a lower inner shaft; the lower inner shaft is fitted so as to be able to slide at least partly within the upper outer tubular shaft; this lower inner shaft can slide freely lengthwise but is fitted to the upper outer tubular shaft in such a way that it cannot rotate.

The lower inner shaft includes at its lower end an axially adjustable supporting foot and at an intermediate position two articulated hooks, which are positioned diametrically opposite to each other and can oscillate between a lowered unclamping position and a raised clamping position.

These articulated hooks comprise intermediate abutment elements for their actuation and displacement from their unclamping position to their clamping position.

The device according to the invention includes clamping means, which are solidly fixed to the upper part of the upper outer tubular shaft and are associated with the lower inner shaft and which clamp reciprocal lengthwise positions of the upper and lower shafts; these clamping means are associated with locking means for their disactivation.

The upper outer shaft includes at its lower end a pair of rigid hooks, which are substantially perpendicular to the axis of that shaft and include a cam-shaped protrusion at an intermediate position.

These rigid hooks can be moved axially along the anti-theft device on the same plane of positioning as the articulated hooks and cooperate with the ends of the articulated hooks, when the latter are in their raised clamping position, so as to clamp the levers of the pedals of the motor vehicle.

The clamping of the levers of the pedals in the device according to the invention takes place by lowering the upper outer shaft until the cam-shaped protrusion of the rigid hooks is caused to cooperate with the abutment elements of the articulated hooks; this cooperation brings the articulated hooks into their raised clamping position, in which the levers of the pedals are clamped at their upper end by the rigid hooks and at their lower end by the articulated hooks.

Thus the levers of the pedals are clamped in such a way that they cannot be moved since the hooks are brought into contact or substantially into contact with the levers.

The articulated hooks and rigid hooks in the device according to the invention are conformed in such a way that they contact each other at their ends so as to prevent any possible tampering with the hooks.

According to a variant, so as to make the anti-theft device suitable for use with all types of vehicles, it is possible to change the width of the seatings determined by the cooperation of the articulated hooks with the rigid hooks, this change being carried out by insertion of at least one adapter element which cooperates laterally with the lever of a pedal.

The attached figures are given as a non-restrictive example and show a preferred form of embodiment of the invention as follows:
- Fig.1: shows a partly cutaway view of an anti-theft device according to the invention in the clamping position;
- Fig.2: shows a section of the grip of the device along the line A-A of Fig.1;
- Fig.3: is a side view of the grip of the device according to the arrow B of Fig.1;
- Fig.4: is a view of the anti-theft device of Fig.1 in the unclamping position;
- Fig.5: shows partly the anti-theft device according to the invention as equipped with two adapter elements;
- Figs.6a and 6b: show in an enlarged scale an adapter element of Fig.5 with a front view and with a lengthwise section along the line C-C of Fig.6a respectively;
- Fig.7: shows a variant of the system for adjusting and clamping the supporting foot.

The reference number 10 in the attached figures denotes generally an anti-theft device to clamp pedals of motor vehicles according to the invention.

The anti-theft device 10 according to the invention is employed to clamp levers 11 of pedals (not shown here) of the motor vehicle so as to prevent movement of the levers 11.

The anti-theft device 10 according to the invention comprises an upper tubular shaft 12 associated telescopically with a lower tubular shaft 13 on which the upper tubular shaft 12 can slide lengthwise; the upper tubular shaft 12 is positioned outside the inner tubular shaft 13 and is unable to rotate thereabout 13.

The upper tubular shaft 12 includes at its upper end a grip 14 which contains a security lock 15 able to be actuated by an appropriate key; the upper tubular shaft 12 includes at its lower end a pair of diametrically opposite rigid hooks 16 extending substantially at a right angle to the upper tubular shaft 12.

In this case the pair of rigid hooks 16 is embodied with one single piece and includes in a median position a downwardly facing cam-shaped protrusion 17, the task of which will be made clear in the description that follows.

In this example the rigid hooks 16 can slide in a lengthwise slit 44 contained in the lower tubular shaft 13 and are secured to the upper tubular shaft 12 with a clip 45 and rivets 46.

In this case the lengthwise slit 44 acts also as a means to prevent rotation as between the upper tubular shaft 12 and the lower tubular shaft 13.

According to a variant which is not shown here, the rigid hooks 16 are external to the upper tubular shaft 12, and each hook 16 comprises a cam-shaped protrusion 17 in a median position.

The lower tubular shaft 13 comprises at its lower end a supporting foot 18 of an adjustable type and also comprises at an intermediate position coinciding substantially with the lower end of the travel of the upper tubular shaft 12 a pair of articulated hooks 19, which are pivoted on respective pivots 20 and are associated with a clip 21 solidly fixed to the lower tubular shaft 13.

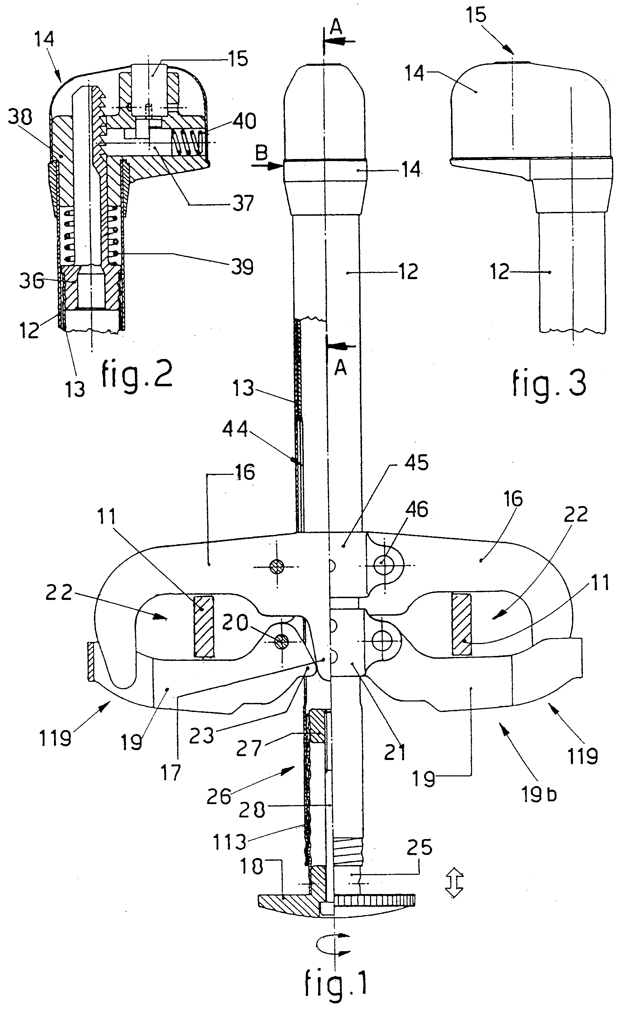

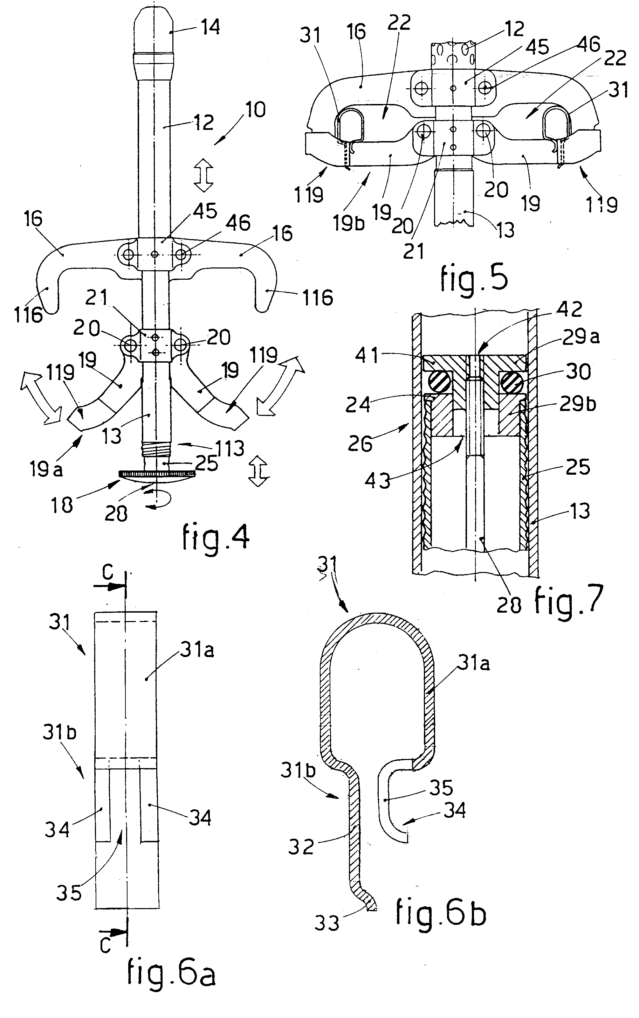

These articulated hooks 19 have a first lowered unclamping position 19a (Fig.4) and a second clamping position 19b (Fig.1), in which they are substantially parallel to, and cooperate with, the rigid hooks 16.

The articulated hooks 19 include at their end associated with the lower tubular shaft 13 abutment elements 23, with which the cam-shaped protrusion 17 associated with the rigid hooks 16 cooperates during the lowering of the upper tubular shaft 12.

In this way the lowering of the upper tubular shaft 12 and the resulting cooperation of the cam-shaped protrusion 17 with the abutment elements 23 cause rotation of the articulated hooks 19 about their relative pivots 20 so as to bring the articulated hooks 19 to their clamping position 19b.

In the clamping position 19b the articulated hooks 19 and the rigid hooks 16 define lodgements 22 within which the levers 11 of the pedals are clamped.

The levers 11 of the pedals in the device 10 according to the invention are held clamped on both their upper and lower sides in a stable manner by the the rigid hooks 16 and articulated hooks 19 respectively.

In this case the rigid hooks 16 include terminal angled portions 116, which cooperate with closed seatings 119 included in the terminal portion of the articulated hooks 19 so as to determine a more effective and secure clamping of the levers 11.

According to a variant shown in Figs.5 and 6, so as to clamp the levers 11 of the pedals laterally in a stable manner, at least one adapter element 31 is fitted and cooperates substantially with the side surface of the lever 11 of the pedal so as to prevent lateral displacements of the device 10 according to the invention in relation to the levers 11.

In this example the adapter element 31 is snapped onto the articulated hooks 19 and, to be more exact, into cooperation with the seatings 119.

The adapter element 31 comprises an upper portion 31a, which cooperates with the lodgement 22 so as to reduce the transverse size of the lodgement 22, and also comprises a lower anchorage gripping portion 31b, which cooperates with the seating 119.

The lower anchorage gripping portion 31b includes in this case an outer vertical shank 32 including a terminal hook 33 cooperating with the seating 119, and also two inner shanks 34, which are separated by a slit 35 used for insertion of the terminal part of the articulated hook 19.

In the clamping position 19b the rigid hooks 16 cooperate with the upper portion 31a of the adapter element 31 and prevent its removal.

The lower tubular shaft 13 in the anti-theft device 10 according to the invention has its lower terminal segment 113 threaded with a female thread, with which a male-threaded rod 25 of the supporting foot 18 rested on the floor of the motor vehicle cooperates.

This supporting foot 18 comprises clamping means 26 which are actuated when the length of the device 10 has been adjusted to suit the type of vehicle.

In this case these clamping means 26 comprise a tapered ring nut 27 associated with an adjustment screw 28.

When the adjustment screw 28 is operated, the tapered ring nut 27 descends into the male-threaded rod 25 of the supporting foot 18 and deforms the rod 25 resiliently so as to obtain clamping of the rod 25 in position in relation to the lower tubular shaft 13.

The adjustment screw 28 is accessible only from the lower side of the supporting foot 18 so as to prevent access to the adjustment screw 28 when the device 10 has been fitted to the vehicle.

According to a variant shown in Fig.7 the clamping means 26 comprise two coaxial sleeves, namely a first upper sleeve 29a and second tower sleeve 29b respectively, which are associated with the adjustment screw 28 and are separated by a resilient ring 30, which for instance consists of rubber.

The first upper sleeve 29a includes an upper flange 41 and contains an axial threaded hole 42, with which the adjustment screw 28 is engaged.

The second lower sleeve 29b includes an upper flange 24, which is supported on the upper surface of the male-threaded rod 25 of the supporting foot 18, and also contains a non-threaded through hole 43 in which the first upper sleeve 29a slides axially, the resilient ring 30 being positioned between the flanges 41 and 24.

When the adjustment screw 28 is operated, the first upper sleeve 29a squashes the resilient ring 30, which is thus deformed, and comes into contact with the inner wall of the lower tubular shaft 13, thus clamping the supporting foot 18 in position.

The upper end of the lower tubular shaft 13 is solidly associated with a toothed pin 36, which is installed so as to be able to slide lengthwise within a third sleeve 38 associated with the upper tubular shaft 12.

According to a variant the toothed pin 36 includes rotation-prevention means, which prevent rotation of the lower tubular shaft 13 in relation to the third sleeve 38 and therefore in relation to the upper tubular shaft 12.

A spring catch 37 able to move at a right angle to the toothed pin 36 and kept resiliently thrust by a spring 40 against the toothed pin 36 cooperates with the third sleeve 38.

The security lock 15 cooperates with the spring catch 37 and is actuated by an appropriate key against the spring 40 so as to release the toothed pin 36 from the spring catch 37 in order to bring the anti-theft device 10 back to its unclamping position.

The device 10 according to the invention comprises a return spring 39, which cooperates at its upper end with the third sleeve 38 and at its lower end with the toothed pin 36 and brings the upper outer tubular shaft 12 automatically back to its raised position and therefore the anti-theft device 10 to the unclamping position when the toothed pin 36 is released from the spring catch 37.

## Claims

1. Anti-theft device to clamp pedals of motor vehicles, which is suitable to clamp a pair of pedals and comprises an upper tubular shaft (12) and a lower tubular shaft (13), these shafts (12-13) being telescopic, coaxial and able to move reciprocally, the upper tubular shaft (12) including at its upper end means for the reciprocal clamping of the shafts (12-13) and at its lower end diametrically opposed rigid hooks (16), which are positioned substantially at a right angle to the axis of the upper shaft (12), the lower tubular shaft (13) including at its lower end a supporting foot (18) and at an intermediate position articulated hooks (19), these articulated hooks (19) having a lowered unclamping position (19a) and a clamping position (19b) in which the articulated hooks (19) cooperate directly with the rigid hooks (16) so as to define lodgements (22) to hold and clamp the levers (11) of the pedals, **characterised in that** the rigid hooks include a cam-shaped protrusion (17) located at a median position between them and extending downwards therefrom, the articulated hooks (19) comprising abutment elements (23) cooperating with the cam-shaped protrusion (17) when the upper tubular shaft (12) is thrust downwards to rotate and raise the articulated hooks for complete blocking of the levers (11) of the pedals in the lodgements (22).

2. Anti-theft device as in Claim 1, in which the rigid hooks (16) include terminal angled portions (116), while the articulated hooks (19) include terminal seatings (119), the angled portions (116) cooperating with the seatings (119) in the clamping position (19b) of the articulated hooks (19).

3. Anti-theft device as in Claim 1 or 2, in which the supporting foot (18) comprises an axially adjustable male-threaded rod (25) and clamping means (26).

4. Anti-theft device as in Claim 3, in which the clamping means (26) comprise a tapered ring nut (27) cooperating with the upper part of the male-threaded rod (25), the tapered ring nut (27) being associated with an adjustment screw (28) cooperating with the lower side of the supporting foot (18).

5. Anti-theft device as in Claim 3, in which the clamping means (26) comprise two coaxial sleeves, namely a first upper sleeve (29a) and a second lower sleeve (29b) respectively, which cooperate with the upper part of the male-threaded rod (25) and include an intermediate resilient ring (30), the first upper sleeve (29a) containing a threaded hole (42) associated with the adjustment screw (28) cooperating with the lower side of the supporting foot (18).

6. Anti-theft device as in any claim hereinbefore, which includes adapter elements (31) associated with the articulated hooks (19) and clamping the levers (11) of the pedals laterally.

7. Anti-theft device as in any claim hereinbefore, which includes at its upper end a grip (14) associated with a security lock (15).

8. Anti-theft device as in any claim hereinbefore, which comprises a return spring (39) cooperating with the upper outer shaft (12) and with the lower inner shaft (13), this return spring (39) bringing the device (10) back to the unclamping position when the security lock (15) is disactivated.

9. Anti-theft device as in any claim hereinbefore, in which the cam-shaped protrusion (17) is within the shafts (12-13).

10. Anti-theft device as in any of Claim 1 to 8 inclusive, in which the cam-shaped protrusion (17) is outside the shafts (12-13).

11. Anti-theft device as in any claim hereinbefore, which includes rotation-prevention means that prevent rotation of the lower inner shaft (13) in relation to the upper outer shaft (12).

## Patentansprüche

1. Diebstahlsicherung mit Pedalschloß für Kraftfahrzeuge, die zum Blockieren eines Pedalpaares geeignet ist und eine obere Rohrstange (12) und eine untere Rohrstange (13) umfaßt, wobei diese Rohrstangen (12, 13) teleskopisch, coaxial und gegenseitig verschiebbar sind, die obere Rohrstange (12) Mittel zum gegenseitigen Blockieren der Rohrstangen (12, 13) bei ihrem Oberteil und feststehende, in ganz entgegengesetzter Richtung liegende und bezüglich der Achse der Rohrstange (12) wesentlich orthogonal angeordnete Haken bei ihrem Unterteil aufweist und die untere Rohrstange (13) eine Auflagefläche (18) bei ihrem Unterteil und Gelenkhaken (19) bei ihrem Mittelteil aufweist, wobei diese Gelenkhaken (19) eine niedrige Freigabestellung (19a) und eine Blockierstellung (19b) aufweisen, bei der die Gelenkhaken (19) zur Bestimmung der Sitze (22) zur Aufnahme und zum Blockieren der Pedalhebel (11) mit den feststehenden Haken (16) direkt mitwirken, dadurch gekennzeichnet, daß die feststehenden Haken ein Nockenprofil (17) aufweisen, das im Mittelbereich zwischen diesen feststehenden Haken angeordnet ist und sich nach unten erstreckt, wobei die Gelenkhaken (19) Anschläge (23) aufweisen, die mit dem Nockenprofil (17) mitwirken, wenn die obere Rohrstange (12) nach unten verschoben wird, um die Gelenkhacken zu drehen und zu heben und die Pedalhebel (11) in den entsprechenden Sitzen (22) vollständig festzumachen.

2. Diebstahlsicherung nach Anspruch 1, dadurch gekennzeichnet, daß die feststehenden Haken (16) Endwinkelprofile (116) aufweisen und die Gelenkhaken (19) Endsitze (119) aufweisen, wobei die Endwinkelprofile (116) in der Blockierstellung (19b) der Gelenkhaken (19) mit dem Endsitzen (119) mitwirken.

3. Diebstahlsicherung nach Anspruch 1 oder 2, dadurch gekennzeichnet, daß die Auflagefläche (18) einen axial verstellbaren Gewindekern (25) und Blockiermittel (26) aufweist.

4. Diebstahlsicherung nach Anspruch 3, dadurch gekennzeichnet, daß die Blockiermittel (26) eine kegelförmige Nutmutter (27) umfaßen, die mit dem Oberteil des Gewindekernes (25) mitwirkt, wobei die kegelförmige Nutmutter (27) mit einer Stellschraube (28) verbunden ist, die mit der Unterseite der Auflagefläche (18) mitwirkt.

5. Diebstahlsicherung nach Anspruch 3, dadurch gekennzeichnet, daß die Blockiermittel (26) zwei koaxiale Buchsen, nämlich eine erste obere Buchse (29a) bzw. eine zweite untere Buchse (29b) umfaßen, die mit dem Oberteil des Gewindekernes (25) mitwirken und einen Zwischensprengring (30) aufweisen, wobei die erste obere Buchse (29a) eine Gewindebohrung aufweist, die mit der mit der Unterseite der Auflagefläche (18) mitwirkenden Stellschraube verbunden ist.

6. Diebstahlsicherung nach dem einen oder dem anderen der vorhergehenden Ansprüche, dadurch gekennzeichnet, daß sie Paßstücke (31) aufweist, die mit den Gelenkhaken (19) verbunden sind und die Pedalhebel (11) seitlich festmachen.

7. Diebstahlsicherung nach dem einen oder dem anderen der vorhergehenden Ansprüche, dadurch gekennzeichnet, daß sie in ihrem oberen Bereich einen Handgriff (14) aufweist, der mit einem Blockierschloß (15) verbunden ist.

8. Diebstahlsicherung nach dem einen oder dem anderen der vorhergehenden Ansprüche, dadurch gekennzeichnet, daß sie eine mit der oberen Außenrohrstange (12) und mit der unteren Innerrohrstange (13) mitwirkende Rückzugfeder (39) umfaßt, wobei diese Rückzugfeder (39) die Diebstahlsicherung (10) in die Freigabestellung wieder bringt, wenn das Blockierschloß (15) unwirksam gemacht wird.

9. Diebstahlsicherung nach dem einen oder dem anderen der vorhergehenden Ansprüche, dadurch gekennzeichnet, daß das Nockenprofil (17) innerhalb der Rohrstangen (12,13) angeordnet ist.

10. Diebstahlsicherung nach dem einen oder dem anderen der vorhergehenden Ansprüche bis Anspruch 8 einbegriffen, dadurch gekennzeichnet, daß das Nockenprofil (17) außerhalb der Rohrstangen (12,13) angeordnet ist.

11. Diebstahlsicherung nach dem einen oder dem anderen der vorhergehenden Ansprüche, dadurch gekennzeichnet, daß sie Mittel aufweist, die das Drehen der unteren Innenrohrstange (13) in bezug auf die obere Außenrohrstange (12) verhindern.

## Revendications

1. Dispositif antivol de blocage des pédales pour véhicules destiné à bloquer une couple de pédales et comprenant une tige tubulaire supérieure (12) et une tige tubulaire inférieure (13), les tiges susdites (12, 13) étant télescopiques, coaxiales et mobiles l'une par rapport à l'autre, la tige tubulaire supérieure (12) présentant dans sa partie supérieure des moyens de blocage réciproque des tiges (12, 13) et dans sa partie inférieure des crochets rigides (16) diamétralement opposés et disposés fondamentalement orthogonaux à l'axe de la tige (12), la tige tubulaire inférieure (13) présentant dans sa partie inférieure une base d'appui (18) et dans une position intermédiaire des crochets articulés (19), les crochets articulés susdits (19) présentant une position de déblocage abaissée (19a) et une position de blocage (19b), dans laquelle les crochets articulés (19) coopèrent directement avec les crochets rigides (16) pour déterminer les sièges (22) de logement et de blocage des leviers (11) des pédales, caractérisé en ce que les crochets rigides présentent un profil à came (17) placé dans une position moyenne entre eux et s'étendant des crochets rigides vers bas, et les crochets articulés (19) présentent des pièces de butée (23) qui coopèrent avec le profil à came (17) lorsque la tige tubulaire supérieure (12) est pressée vers bas pour faire tourner les crochets articulés et les soulever afin de fermer complètement les leviers (11) des pédales dans leurs sièges (22).

2. Dispositif antivol selon la revendication 1, caractérisé en ce que les crochets rigides (16) présentent des éléments angulaires terminaux (116) et les crochets articulés (19) présentent des sièges terminaux (119), les éléments angulaires (116) susdits coopérant avec les sièges (119) dans la position de blocage (19b) des crochets articulés (19).

3. Dispositif antivol selon la revendication 1 ou 2, caracterisé en ce que la base d'appui (18) présente une tige filetée mâle (25) réglable en direction axiale et des moyens de blocage (26).

4. Dispositif antivol selon la revendication 3, caracterisé en ce que les moyens de blocage (26) comprennent une bague conique (27) qui coopère avec la partie supérieure de la tige filetée mâle (25), la bague conique (27) susdite étant associée à une vis de réglage (28) qui coopère avec la partie inférieure de la base d'appui (18).

5. Dispositif antivol selon la revendication 3, caracterisé en ce que les moyens de blocage (26) comprennent deux douilles coaxiales, c'est-à-dire une première douille supérieure (29a) et une deuxième douille inférieure (29b) qui coopèrent avec la partie supérieure de la tige filetée mâle (25) et présentent un anneau ressort intermédiaire (30), la première douille supérieure (29a) susdite présentant un trou fileté (42) associé à la vis de réglage (28) qui coopère avec la partie inférieure de la base d'appui (18).

6. Dispositif antivol selon l'une ou l'autre des revendications précédentes, caracterisé en ce qu'il présente des adaptateurs (31) associés aux crochets articulés (19), les adaptateurs susdits bloquant latéralement les leviers (11) des pédales.

7. Dispositif antivol selon l'une ou l'autre des revendications précédentes, caracterisé en ce qu'il présente dans sa partie supérieure une poignée (14) associée à une serrure de blocage (15).

8. Dispositif antivol selon l'une ou l'autre des revendications précédentes, caracterisé en ce qu'il comprend un ressort de rappel (39) qui coopère avec la tige supérieure extérieure (12) et avec la tige inférieure intérieure (13), le ressort de rappel (39) susdit reportant le dispositif (10) en position de déblocage lorsque la serrure (15) est désactivée.

9. Dispositif antivol selon l'une ou l'autre des revendications précédentes, caracterisé en ce que le profil à came (17) se trouve à l'intérieur des tiges (12, 13).

10. Dispositif antivol selon l'une ou l'autre des revendications précédentes jusqu'à la revendication 8 y comprise, caracterisé en ce que le profil à came (17) se trouve à l'extérieur des tiges (12, 13).

11. Dispositif antivol selon l'une ou l'autre des revendications précédentes, caracterisé en ce qu'il présente des moyens antirotation qui empêchent la rotation de la tige inférieure intérieure (13) par rapport à la tige supérieure extérieure (12).
